(19) **Europäisches Patentamt / European Patent Office / Office européen des brevets**

(11) **EP 4 773 356 A1**

(12) **EUROPEAN PATENT APPLICATION**
published in accordance with Art. 153(4) EPC

(43) Date of publication:
08.07.2026 Bulletin 2026/28

(21) Application number: 25776835.8

(22) Date of filing: 13.03.2025

(51) International Patent Classification (IPC):
$H01M\ 50/105^{(2021.01)}$ $\quad H01M\ 50/184^{(2021.01)}$
$H01M\ 50/186^{(2021.01)}$

(52) Cooperative Patent Classification (CPC):
Y02E 60/10

(86) International application number:
PCT/CN2025/082371

(87) International publication number:
WO 2025/201079 (02.10.2025 Gazette 2025/40)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 27.03.2024 CN 202410362731

(71) Applicant: Ningde Amperex Technology Limited
Ningde, Fujian 352100 (CN)

(72) Inventors:
• CHEN, Zelin
Ningde, Fujian 352100 (CN)
• XING, Dingqing
Ningde, Fujian 352100 (CN)
• LIU, Jian
Ningde, Fujian 352100 (CN)
• ZHANG, Wenjing
Ningde, Fujian 352100 (CN)

(74) Representative: Kraus & Lederer PartGmbB
Thomas-Wimmer-Ring 15
80539 München (DE)

(54) **SECONDARY BATTERY AND ELECTRONIC DEVICE**

(57) This application discloses a secondary battery and an electronic device. The secondary battery includes an electrode assembly, a packaging bag, and an insulation adhesive. The packaging bag includes a main portion and a first side seal edge. The main portion accommodates the electrode assembly, and includes a first sidewall and a second sidewall disposed along a thickness direction of the secondary battery. The first side seal edge includes a first connecting portion and a second connecting portion disposed in sequence. The first connecting portion is connected to the main portion. The second connecting portion is bent toward the main portion relative to the first connecting portion. An angle θ is formed between the first connecting portion and the first sidewall, satisfying: 0° < θ < 90°. A thickness of the main portion is less than a width of the first connecting portion. The insulation adhesive covers one end, facing the main portion, of the second connecting portion. The insulation adhesive bonds the first connecting portion to the second connecting portion, and further bonds the second connecting portion to the main portion. This application increases energy density. When sealing an end portion of the second connecting portion, this application reduces the risk of deformation of the first side seal edge.

FIG. 3

## Description

### TECHNICAL FIELD

This application relates to the technical field of energy storage, and in particular, to a secondary battery and an electronic device.

### BACKGROUND

With the tendency of electronic products to become thinner and lighter, higher requirements are also imposed on the size of secondary batteries. Users are expecting the secondary batteries to be as thin as practicable. Therefore, ultra-thin secondary batteries have become a trend. However, the edge folding process of conventional secondary batteries is not applicable to ultra-thin secondary batteries. The folded edge of an ultra-thin secondary battery is longer than the thickness of a battery body. If a folding process is performed, the folded edge will extend beyond the battery body in the thickness direction of the secondary battery, thereby affecting the overall thickness of the secondary battery.

Currently, the ultra-thin secondary batteries in the related art are typically not folded at the edge, and adhesive is applied at the end of a seal edge to cover the aluminum layer of an aluminum laminated film package to avoid exposure of the aluminum layer of the aluminum laminated film. The design of laying the seal edge flat leads to occupation of space of the secondary battery in the width direction, thereby reducing the energy density. In addition, the adhesive layer on the seal edge is exposed to the outside, thereby posing a risk of debonding and aluminum leakage.

### SUMMARY

In view of the above situation, this application provides a secondary battery and an electronic device to increase energy density of the secondary battery and reduce the risk of exposure of the aluminum layer.

According to a first aspect, this application provides a secondary battery. The secondary battery includes an electrode assembly, a packaging bag, and an insulation adhesive. The packaging bag includes a main portion and a sealing portion. An accommodation cavity is provided in the main portion. The accommodation cavity accommodates the electrode assembly. The main portion includes a first sidewall and a second sidewall disposed opposite to each other along a first direction. The first direction is a thickness direction of the secondary battery. The sealing portion is connected to the main portion and seals the accommodation cavity. The sealing portion includes a first side seal edge. The first side seal edge is disposed on one side of the main portion in a second direction perpendicular to the first direction. The first side seal edge includes a first connecting portion and a second connecting portion disposed in sequence. The first connecting portion is connected to the main portion. The second connecting portion is bent toward the main portion relative to the first connecting portion. An angle 0 is formed between the first connecting portion and the first sidewall, satisfying: $0° < \theta < 90°$. Along the first direction, a thickness of the main portion is H. Along an extension direction from an end at which the first connecting portion is connected to the main portion to an end at which the first connecting portion is away from the main portion, a width of the first connecting portion is $T_1$, satisfying: $H < T_1$. The insulation adhesive covers one end, facing the main portion, of the second connecting portion. The insulation adhesive bonds the first connecting portion to the second connecting portion. The insulation adhesive further bonds the second connecting portion to the main portion.

The first connecting portion is at an angle to the first sidewall, so that the first side seal edge as a whole is disposed at an angle to the first sidewall, thereby reducing the space occupied by the first side seal edge. In contrast to the technical solution in which the seal edge is laid flat, the technical solution hereof reduces the width of the secondary battery in the second direction. In contrast to the technical solution in which the edge is folded, the technical solution hereof reduces the thickness of the secondary battery in the first direction, thereby increasing the energy density of the secondary battery. The insulation adhesive covers one end, facing the main portion, of the second connecting portion, so as not to expose the aluminum layer at the end, facing the main portion, of the second connecting portion. In this way, the insulation adhesive is located inside, thereby reducing the risk of debonding of the adhesive. The insulation adhesive bonds the first connecting portion to the second connecting portion, and the insulation adhesive further bonds the second connecting portion to the main portion, thereby favorably maintaining the shape of the angle between the first side seal edge and the first sidewall, and reducing the risk of deformation of the first connecting portion and the second connecting portion.

In one or more embodiments, the main portion further includes a third sidewall and a fourth sidewall disposed opposite to each other along the second direction. The first side seal edge is connected to the third sidewall. The insulation adhesive includes a first part and a second part. The first part is disposed between the first connecting portion and the second connecting portion. The first part bonds the first connecting portion to the second connecting portion. At least a part of the second part is disposed between the second connecting portion and the third sidewall. The second part bonds the second connecting portion to the third sidewall. Along the extension direction from the end at which the first connecting portion is connected to the main portion to the end at which the first connecting portion is away from the main portion, a height of the first part is $D_1$, and along the first direction, a height of the second part is $D_2$, satisfying: $0 < D_1 < T_1$, and $0 < D_2 < H$.

In the above embodiments, $D_1$ and $D_2$ satisfying the conditions of $0 < D_1 < T_1$ and $0 < D_2 < H$ improve the overall structural strength of the first side seal edge, improve the tightness of the fit between the first connecting portion and the second connecting portion, and are conducive to maintaining the shape of the angle between the first side seal edge and the first sidewall and reducing the risk of overflow of the insulation adhesive out of the main portion.

In one or more embodiments, $D_1 \leq 0.7T_1$, and $D_2 \leq 0.4H$.

In the above embodiments, $D_1$ and $D_2$ satisfying the conditions of $D_1 \leq 0.7T_1$ and $D_2 \leq 0.4H$ are conducive to maintaining the shape of the angle between the first side seal edge and the first sidewall, and are conducive to saving the insulation adhesive and reducing cost. The above arrangement is also conducive to reducing the risk of overweight of one end, away from the first sidewall, of the first side seal edge, and the overweight poses a risk of the first side seal edge spreading out. The above arrangement also reduces the risk of insulation adhesive overflow that causes a poor appearance. In addition, the above arrangement also reduces the risk that the third sidewall is ruptured by a drop of a cured insulation adhesive.

In one or more embodiments, $0.5$ mm $\leq H < 1.5$ mm, $1.5$ mm $\leq T_1 \leq 3$ mm, and $D_1 \geq 0.5$ mm.

In the above embodiments, when H falls within the range of $0.5$ mm $\leq H < 1.5$ mm, the secondary battery is an ultra-thin secondary battery. When $D_1 \geq 0.5$ mm, the arrangement further improves the overall structural strength of the first side seal edge, and further improves the tightness of the fit between the first connecting portion and the second connecting portion.

In one or more embodiments, $0.5$ mm $\leq H < 1.5$ mm, $1.5$ mm $\leq T_1 \leq 3$ mm, and $0.3$ mm $\leq D_2 \leq 0.5$ mm.

In the above embodiments, when H falls within the range of $0.5$ mm $\leq H < 1.5$ mm, the secondary battery is an ultra-thin secondary battery. The condition of $0.3$ mm $\leq D_2 \leq 0.5$ mm being satisfied is conducive to maintaining the shape of the angle between the first side seal edge and the first sidewall, and is conducive to reducing the risk of overflow of the insulation adhesive out of the main portion.

In one or more embodiments, along a third direction, a connection length between the main portion and the first connecting portion is $L_1$, and a length of the insulation adhesive is $L_2$, satisfying: $4L_1/5 \leq L_2 \leq L_1$. The first direction, the second direction, and the third direction are perpendicular to each other.

In the above embodiments, the condition of $4L_1/5 \leq L_2 \leq L_1$ being satisfied is conducive to improving the bonding effect of the insulation adhesive and maintaining the shape of the angle between the first side seal edge and the first sidewall.

In one or more embodiments, along an extension direction from an end at which the second connecting portion is close to the main portion to an end at which the second connecting portion is away from the main portion, a width of the second connecting portion is $T_2$, satisfying: $0$ mm $< |T_2 - T_1| \leq 0.5$ mm.

In the above embodiments, when the condition of $0$ mm $< |T_2 - T_1| \leq 0.5$ mm is satisfied, on the one hand, the width of the second connecting portion is less than the width of the first connecting portion, thereby reserving space between the end, facing the main portion, of the second connecting portion and the end at which the first connecting portion is connected to the main portion. The reserved space can accommodate the insulation adhesive, thereby making it convenient for the insulation adhesive to cover the end, facing the main portion, of the second connecting portion. The reserved space can also allow the insulation adhesive in a fluid state to pass through, thereby making it convenient for the insulation adhesive to flow to the space between the first connecting portion and the second connecting portion. On the other hand, the above condition being satisfied prevents an excessive distance from the end, facing the main portion, of the second connecting portion to the end at which the first connecting portion is connected to the main portion. This arrangement prevents an excessive height of the insulation adhesive between the second connecting portion and the third sidewall in the first direction, thereby reducing the amount of the insulation adhesive consumed, reducing weight, increasing the energy density of the secondary battery, and reducing cost.

In one or more embodiments, $25° \leq \theta \leq 75°$.

In the above embodiments, the angle $\theta$ satisfying the above relationship further reduces the overall occupied space of the secondary battery, thereby further increasing the energy density of the secondary battery.

In one or more embodiments, along a second direction, an orthographic projection of the first side seal edge lies between the first sidewall and the second sidewall.

In the above embodiments, the orthographic projection of the first side seal edge lies between the plane at which the first sidewall is located and a plane at which the second sidewall is located. In this way, the first side seal edge is prevented from extending beyond the first sidewall and the second sidewall in the first direction. In this way, the thickness of the secondary battery in the first direction is not affected by the first side seal edge, thereby reducing the overall thickness of the secondary battery.

In one or more embodiments, along the first direction, one end, connected to the main portion, of the first connecting portion is closer to the first sidewall than the second sidewall.

In the above embodiments, along the first direction, one end, connected to the main portion, of the first connecting portion is closer to the first sidewall than the second sidewall, thereby fully utilizing the occupied space of the secondary battery in the first direction, and improving the space efficiency of the secondary battery.

In one or more embodiments, the main portion further includes a third sidewall and a fourth sidewall disposed opposite to each other along the second direction. The first connecting portion is connected to the third sidewall and the first sidewall separately.

In the above embodiments, the first connecting portion is connected to the third sidewall and the first sidewall separately, thereby utilizing the occupied space of the secondary battery in the first direction more efficiently, and further improving the space efficiency of the secondary battery.

In one or more embodiments, the material of the insulation adhesive includes at least one of vinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene fluoride, polyethylene, polypropylene, polyacrylic acid, styrene-butadiene rubber, acrylated styrene-butadiene rubber, epoxy resin, or nylon.

In one or more embodiments, the packaging bag includes a first flexible portion and a second flexible portion. The first flexible portion and the second flexible portion enclose and define the main portion. The first flexible portion is connected to the second flexible portion to form the sealing portion that seals the accommodation cavity.

A second aspect of this application provides an electronic device. The electronic device includes the secondary battery disclosed in any one of the above embodiments.

In the above embodiments, the space occupied by the secondary battery is reduced, and the energy density is increased, thereby increasing the service life of the electronic device, and enhancing the performance of the electronic device.

In this application, the secondary battery includes an electrode assembly, a packaging bag, and an insulation adhesive. The packaging bag includes a main portion and a sealing portion. The main portion includes a first sidewall and a second sidewall disposed opposite to each other along the first direction. The sealing portion includes a first side seal edge. The first side seal edge includes a first connecting portion and a second connecting portion disposed in sequence. The first connecting portion is connected to the main portion. The second connecting portion is bent toward the main portion relative to the first connecting portion. An angle formed between the first connecting portion and the first sidewall is greater than 0° and less than 90°. A thickness of the main portion is less than a width of the first connecting portion. The insulation adhesive covers one end, facing the main portion, of the second connecting portion. The insulation adhesive bonds the first connecting portion to the second connecting portion. The insulation adhesive further bonds the second connecting portion to the main portion. The first connecting portion is at an angle to the first sidewall, thereby reducing the space occupied by the first side seal edge, and increasing the energy density of the secondary battery. The insulation adhesive covers one end, facing the main portion, of the second connecting portion, so as not to expose the aluminum layer at the end, facing the main portion, of the second connecting portion, thereby reducing the risk of debonding of the adhesive. The insulation adhesive bonds the first connecting portion to the second connecting portion, and the insulation adhesive further bonds the second connecting portion to the main portion, thereby favorably maintaining the shape of the angle between the first side seal edge and the first sidewall, and reducing the risk of deformation of the first connecting portion and the second connecting portion.

**BRIEF DESCRIPTION OF DRAWINGS**

FIG. 1 is a schematic structural diagram of a secondary battery according to an embodiment of this application;
FIG. 2 is a schematic exploded view of a secondary battery according to an embodiment of this application;
FIG. 3 is a side view of a secondary battery according to an embodiment of this application;
FIG. 4 is a side view of a partial region of a secondary battery according to an embodiment of this application;
FIG. 5 is a top view of a secondary battery according to an embodiment of this application; and
FIG. 6 is a schematic diagram of an electronic device according to an embodiment of this application.

List of reference numerals:

secondary battery 100
electrode assembly 10
packaging bag 20
main portion 21

first sidewall 211

second sidewall 212

third sidewall 213

fourth sidewall 214

fifth sidewall 215

sixth sidewall 216

sealing portion22

first side seal edge 221

first connecting portion2212

second connecting portion 2214

second side seal edge 222

top seal edge 223

accommodation cavity 23

first flexible portion 20a

second flexible portion 20b

insulation adhesive30

first part 31

second part 32

first tab 40

second tab50

device body 200

electronic device 1000

first direction X

second direction Y

third direction Z

## DETAILED DESCRIPTION

The following describes the technical solutions in some embodiments of this application with reference to the drawings hereof. Evidently, the described embodiments are merely a part of but not all of the embodiments of this application.

It is hereby noted that unless otherwise expressly specified and defined, the terms "mount", "concatenate", "connect", and "fix" need to be understood in a broad sense. For example, such terms may refer to a fixed connection, a detachable connection, or an integrated connection, and may be a mechanical connection or an electrical connection. A component considered to be "connected" to another component may be directly connected to the other component or may be connected to the other component through an intermediate component. A component considered to be "disposed on" another component may be directly disposed on the other component or may be disposed on the other component through an intermediate component.

As used herein, the terms such as "top" and "side" and other similar expressions are merely for ease of description.

Unless otherwise expressly specified, the term "a plurality of" as used herein means two or more.

The technical terms "first" and "second" are merely intended to distinguish between different items but not intended to indicate or imply relative importance or implicitly specify the number of the indicated technical features, specific order, or order of precedence.

The term "perpendicular" is a description of an ideal state between two components. In the actual production or use state, one component may be approximately perpendicular to another component.

The term "parallel" is a description of an ideal state between two components. In an actual production or use state, one component may be approximately parallel to another component.

It is hereby noted that a parameter described as being greater than, equal to, or less than a specified endpoint value means that the endpoint value allows for a tolerance of $\pm 5\%$.

It is hereby noted that the dimensions of the layers, regions, films, plates, blocks, columns, protrusions, recesses, and the like shown in the drawings are given for better understanding and more convenient description. This application is not limited to the dimensions shown in the drawings. To make this application clear, the elements not related to the description are omitted from the details of this specification.

Unless otherwise defined, all technical and scientific terms used herein bear the same meanings as what is normally understood by a person skilled in the technical field of this application. The terms used in the specification of this application are merely intended to describe specific embodiments but not to limit this application.

The ultra-thin secondary batteries in the related art are typically not folded at the edge, and adhesive is applied at the end of a seal edge to cover the aluminum layer of an aluminum laminated film package to avoid exposure of the aluminum layer of the aluminum laminated film. The design of laying the seal edge flat leads to occupation of space of the secondary battery in the width direction, thereby reducing the energy density. In addition, the adhesive layer on the seal edge is exposed to the outside, thereby posing a risk of debonding and aluminum leakage.

This application discloses a secondary battery. The secondary battery includes an electrode assembly, a packaging bag, and an insulation adhesive. The packaging bag includes a main portion and a sealing portion. An accommodation cavity is provided in the main portion. The accommodation cavity accommodates the electrode assembly. The main portion includes a first sidewall and a second sidewall disposed opposite to each other along a first direction. The first direction is a thickness direction of the secondary battery. The sealing portion is connected to the main portion and seals the accommodation cavity. The sealing portion includes a first side seal edge. The first side seal edge is disposed on one side of the main portion in a second direction perpendicular to the first direction. The first side seal edge includes a first connecting portion and a second connecting portion disposed in sequence. The first connecting portion is connected to the main portion. The second connecting portion is bent toward the main portion relative to the first connecting portion. An angle $\theta$ is formed between the first connecting portion and the first sidewall, satisfying: $0° < \theta < 90°$. Along the first direction, a thickness of the main portion is H. Along an extension direction from an end at which the first connecting portion is connected to the main portion to an end at which the first connecting portion is away from the main portion, a width of the first connecting portion is $T_1$, satisfying: $H < T_1$. The insulation adhesive covers one end, facing the main portion, of the second connecting portion. The insulation adhesive bonds the first connecting portion to the second connecting portion. The insulation adhesive further bonds the second connecting portion to the main portion.

The first connecting portion is at an angle to the first sidewall, so that the first side seal edge as a whole is disposed at an angle greater than 0° and less than 90° to the first sidewall, thereby reducing the space occupied by the first side seal edge. In contrast to the technical solution in which the seal edge is laid flat, the technical solution hereof reduces the width of the secondary battery in the second direction. In contrast to the technical solution in which the edge is folded, the technical solution hereof reduces the thickness of the secondary battery in the first direction, thereby increasing the energy density of the secondary battery. The insulation adhesive covers one end, facing the main portion, of the second connecting portion, so as not to expose the aluminum layer at the end, facing the main portion, of the second connecting portion. In this way, the insulation adhesive is located inside, thereby reducing the risk of debonding of the adhesive. The insulation adhesive bonds the first connecting portion to the second connecting portion, and the insulation adhesive further bonds the second connecting portion to the main portion, thereby favorably maintaining the shape of the angle between the first side seal edge and the first sidewall, and reducing the risk of deformation of the first connecting portion and the second connecting portion.

The following describes some embodiments of this application with reference to drawings. To the extent that no conflict occurs, the following embodiments and the features in the embodiments may be combined with each other.

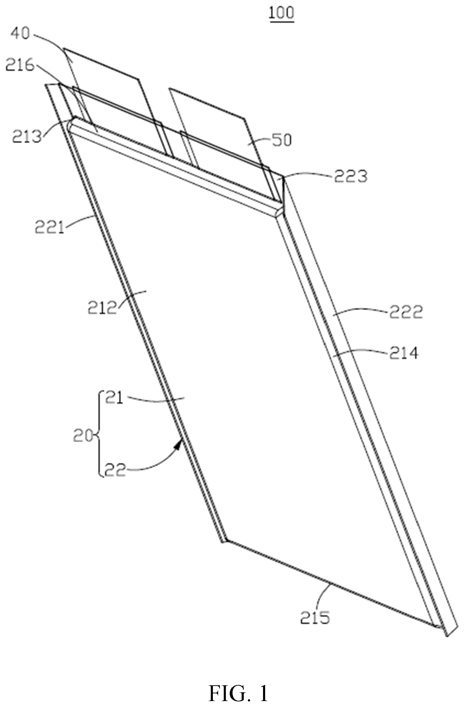

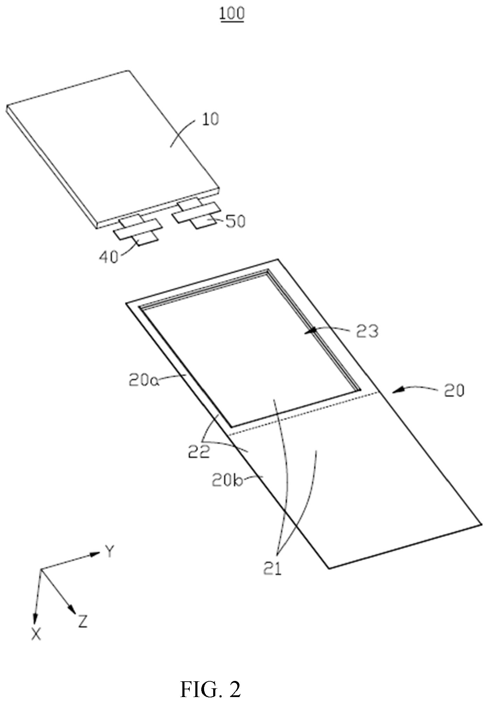

Referring to FIG. 1 and FIG. 2, an embodiment of this application provides a secondary battery 100. The secondary battery 100 includes an electrode assembly 10 and a packaging bag 20. The packaging bag 20 accommodates the electrode assembly 10.

In some embodiments, the electrode assembly 10 includes a positive electrode plate, a negative electrode plate, and a separator disposed between the positive electrode plate and the negative electrode plate. The separator is configured to separate the positive electrode plate from the negative electrode plate.

In some embodiments, the positive electrode plate, the separator, and the negative electrode plate are stacked to form a stacked structure. In some other embodiments, the positive electrode plate, the separator, and the negative electrode plate are stacked and then wound to form a jelly-roll structure.

In some embodiments, the positive electrode plate includes a positive current collector and a positive active material layer that are stacked. The negative electrode plate includes a negative current collector and a negative active material layer that are stacked.

In some embodiments, the positive current collector may be a metal layer containing at least one of aluminum, nickel, tantalum, or titanium, such as aluminum foil. The negative current collector may be a metal layer containing at least one of copper, nickel, tantalum, or titanium, such as copper foil.

In some embodiments, the positive active material layer includes a positive active material. The positive active material may include at least one of lithium cobalt oxide, lithium nickel cobalt manganese oxide, lithium nickel cobalt aluminum oxide, lithium iron phosphate, lithium manganese iron phosphate, or lithium manganese oxide. The negative active material layer includes a negative active material. The negative active material may include at least one of graphite, hard carbon, soft carbon, silicon, a silicon-oxygen material, or a silicon-carbon material.

In some embodiments, the separator is an insulating film such as a polyethylene film, a polypropylene film, a polyester film, or a polyimide film.

In some embodiments, the secondary battery 100 is a pouch battery, and the packaging bag 20 is an aluminum laminated film. In some embodiments, the aluminum laminated film may be formed of an outermost nylon layer, an inner aluminum layer, and a heat-sealing layer. A cutting process is employed in making the aluminum laminated film packaging bag 20 of the secondary battery 100. Therefore, the end surface of the edge of the aluminum laminated film usually exposes the aluminum layer.

In some embodiments, referring to FIG. 1 and FIG. 2, the packaging bag 20 includes a main portion 21 and a sealing portion 22. The main portion 21 is provided with an accommodation cavity 23. The accommodation cavity 23 accommodates the electrode assembly 10. The sealing portion 22 is connected to the main portion 21 and is configured to seal the accommodation cavity 23.

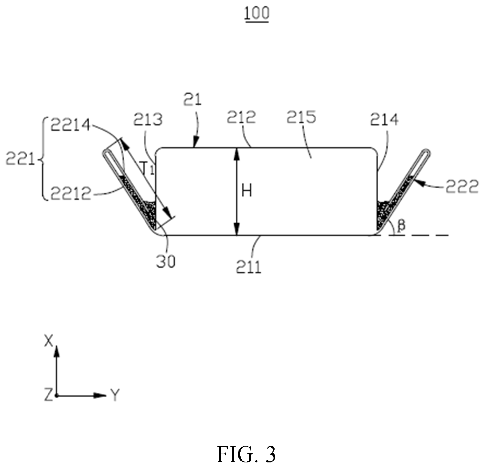

In some embodiments, referring to FIG. 1 and FIG. 3, the main portion 21 includes a first sidewall 211 and a second sidewall 212 disposed opposite to each other along a first direction X. The first direction X is a thickness direction of the secondary battery 100.

In some embodiments, referring to FIG. 1 and FIG. 3, the main portion 21 further includes a third sidewall 213 and a fourth sidewall 214 disposed opposite to each other along a second direction Y. The second direction Y is perpendicular to the first direction X.

In some embodiments, referring to FIG. 1 and FIG. 3, the main portion 21 further includes a fifth sidewall 215 and a sixth sidewall 216 disposed opposite to each other along a third direction Z. The first direction X, the second direction Y, and the third direction Z are perpendicular to each other.

In some embodiments, referring to FIG. 1 and FIG. 2, the packaging bag 20 includes a first flexible portion 20a and a second flexible portion 20b. The first flexible portion 20a and the second flexible portion 20b enclose and define the main portion 21. The first flexible portion 20a is connected to the second flexible portion 20b to form the sealing portion 22 that seals the accommodation cavity 23.

In some embodiments, referring to FIG. 1 and FIG. 2, one side of the first flexible portion 20a is connected to one side of the second flexible portion 20b. A junction between first flexible portion 20a and the second flexible portion 20b is folded to connect the first flexible portion 20a and the second flexible portion 20b together. The first flexible portion 20a and the second flexible portion 20b enclose and define the main portion 21. A sealing portion 22 is formed at a junction between the first flexible portion 20a and the second flexible portion 20b.

In some embodiments, referring to FIG. 1 and FIG. 3, the sealing portion 22 includes a first side seal edge 221. The first side seal edge 221 is disposed on one side of the main portion 21 in the second direction Y.

In some embodiments, the first side seal edge 221 is connected to the third sidewall 213.

In some embodiments, referring to FIG. 1 and FIG. 3, the sealing portion 22 further includes a second side seal edge 222 and a top seal edge 223. The second side seal edge 222 is disposed on one side, facing away from the first side seal edge 221, of the main portion 21 in the second direction Y. The top seal edge 223 is disposed on one side of the main portion 21 in the third direction Z. The top seal edge 223 is connected to the first side seal edge 221 and the second side seal edge 222. The third direction Z, the first direction X, and the second direction Y are perpendicular to each other.

In some embodiments, the second side seal edge 222 is connected to the fourth sidewall 214. The top seal edge 223 is connected to the fifth sidewall 215 or the sixth sidewall 216.

In some embodiments, referring to FIG. 1 and FIG. 2, the secondary battery 100 further includes a first tab 40 and a second tab 50. The electrode assembly 10 is connected to the first tab 40 and the second tab 50. The first tab 40 and the second tab 50 extend out of the packaging bag 20 from a top seal edge 223 to lead the polarity of the electrode assembly 10 out of the packaging bag 20.

In some embodiments, the first tab 40 is connected to the positive electrode plate. The material of the first tab 40 may be the same as the material of the positive current collector. The first tab 40 is a positive tab. The second tab 50 is connected to the negative electrode plate. The material of the second tab 50 may be the same as the material of the negative current collector. The second tab 50 is a negative tab.

In some embodiments, the first tab 40 is connected to the negative electrode plate. The material of the first tab 40 may be the same as the material of the negative current collector. The first tab 40 is a negative tab. The second tab 50 is connected to the positive electrode plate. The material of the second tab 50 may be the same as the material of the positive current collector. The second tab 50 is a positive tab.

It is hereby noted that the first side seal edge 221 and the second side seal edge 222 may assume substantially the same structure in some embodiments. The following mainly describes some embodiments of the specific configuration of the first side seal edge 221. The configuration and beneficial effects of the second side seal edge 222 may be learned with reference to any one of the following embodiments of the first side seal edge 221, the details of which are omitted herein.

In some embodiments, referring to FIG. 3, the first side seal edge 221 includes a first connecting portion 2212 and a second connecting portion 2214 disposed in sequence. The first connecting portion 2212 is connected to the main portion 21. The second connecting portion 2214 is bent toward the main portion 21 relative to the first connecting portion 2212. An angle θ is formed between the first connecting portion 2212 and the first sidewall 211, satisfying: 0° < θ < 90°. The second connecting portion 2214 and the first connecting portion 2212 are stacked. Along the first direction X, the thickness of the main portion 21 is H. Along an extension direction from an end at which the first connecting portion 2212 is connected to the main portion 21 to an end at which the first connecting portion 2212 is away from the main portion 21, the width of the first connecting portion 2212 is $T_1$, satisfying: $H < T_1$. The secondary battery 100 further includes an insulation adhesive 30. The insulation adhesive 30 covers one end, facing the main portion 21, of the second connecting portion 2214. The insulation adhesive 30 bonds the first connecting portion 2212 to the second connecting portion 2214. The insulation adhesive 30 further bonds the second connecting portion 2214 to the main portion 21.

Arranged in this way, first, the first connecting portion 2212 is at an angle to the first sidewall 211, so that the first side seal edge 221 as a whole is disposed at an angle to the first sidewall 211, thereby reducing the space occupied by the first side seal edge 221. In contrast to the technical solution in which the seal edge is laid flat, the technical solution hereof reduces the width of the secondary battery 100 in the second direction Y. In contrast to the technical solution in which the edge is folded, the technical solution hereof reduces the thickness of the secondary battery 100 in the first direction X, thereby increasing the energy density of the secondary battery 100. Second, the insulation adhesive 30 covers one end, facing the main portion 21, of the second connecting portion 2214, so as not to expose the aluminum layer at the end, facing away from the main portion 21, of the second connecting portion 2214. In this way, the insulation adhesive 30 is located inside, thereby reducing the risk of debonding of the adhesive. Third, the insulation adhesive 30 bonds the first connecting portion 2212 to the second connecting portion 2214, and the insulation adhesive 30 also bonds the second connecting portion 2214 to the main portion 21, thereby improving the overall structural strength of the first side seal edge 221, and maintaining the shape of the angle between the first side seal edge 221 and the first sidewall 211. The insulation adhesive 30 that bonds the first connecting portion 2212 to the second connecting portion 2214 also improves the tightness of the fit between the first connecting portion 2212 and the second connecting portion 2214. When the first connecting portion 2212 or the second connecting portion 2214 is squeezed or impacted, the first part 31 can play a role in suppressing the deformation of the first connecting portion 2212 and the second connecting portion 2214, thereby reducing the probability of the first connecting portion 2212 spreading out relative to the second connecting portion 2214.

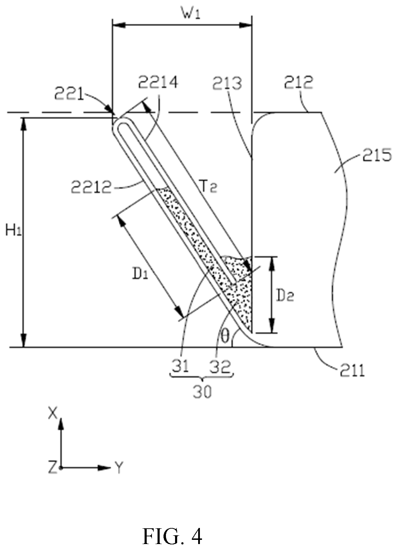

It is hereby noted that, referring to FIG. 4, along the first direction X, the height of the first side seal edge 221 is $H_1$, and along the second direction Y, the width of the first side seal edge 221 is $W_1$, satisfying: $\tan\theta = H_1/W_1$.

In contrast to the technical solution in which the first side seal edge 221 and the second side seal edge 222 are laid flat, the increase percentage of the volumetric energy density of the secondary battery 100 in the above embodiment may be calculated in the following way:

The structures of the first side seal edge 221 and the second side seal edge 222 are basically the same. It is defined that the overall width of the secondary battery 100 along the second direction Y in a flat-laying state of the first side seal edge 221 and the second side seal edge 222 is W, and the width of the first side seal edge 221 along the second direction Y in a flat-laying state of the first side seal edge 221 is M. In the above embodiment, the increase percentage of energy density of the secondary battery 100 is $[(W - 2 \times W_1)/(W - 2 \times M)]$ %.

In some embodiments, referring to FIG. 3, the insulation adhesive 30 bonds the second connecting portion 2214 to the third sidewall 213 of the main portion 21.

In some embodiments, referring to FIG. 3 and FIG. 4, the insulation adhesive 30 includes a first part 31 disposed between the first connecting portion 2212 and the second connecting portion 2214. The first part 31 bonds the first connecting portion 2212 to the second connecting portion 2214. Along the extension direction from the end at which the first connecting portion 2212 is connected to the main portion 21 to the end at which the first connecting portion 2212 is away from the main portion 21, the height of the first part 31 is $D_1$, satisfying: $0 < D_1 < T_1$. The condition of $0 < D_1 < T_1$ being satisfied improves the overall structural strength of the first side seal edge 221, and improves the tightness of the fit between the first connecting portion 2212 and the second connecting portion 2214.

In some embodiments, the condition of $D_1 \leq 0.7T_1$ being satisfied is conducive to maintaining the shape of the angle between the first side seal edge 221 and the first sidewall 211, saving insulation adhesive 30, saving cost, and reducing the risk of the first side seal edge 221 being prone to spread out due to the overweight of the end, away from the first sidewall 211, of the first side seal edge 221.

In some embodiments, the condition of $D_1 \geq 0.5$ mm being satisfied further improves the overall structural strength of the first side seal edge 221, and further improves the tightness of the fit between the first connecting portion 2212 and the second connecting portion 2214.

As an example, $D_1$ may be any one of 0.5 mm, 0.52 mm, 0.54 mm, 0.55 mm, 0.56 mm, 0.58 mm, 0.6 mm, 0.62 mm, 0.64 mm, 0.65 mm, 0.66 mm, 0.68 mm, 0.7 mm, 0.72 mm, 0.74 mm, 0.75 mm, 0.76 mm, 0.78 mm, 0.8 mm, 0.82 mm, 0.84 mm, 0.85 mm, 0.86 mm, 0.88 mm, 0.9 mm, 0.92 mm, 0.94 mm, 0.95 mm, 0.96 mm, 0.98 mm, or 1 mm.

In some embodiments, referring to FIG. 4, the insulation adhesive 30 further includes a second part 32 disposed between the second connecting portion 2214 and the main portion 21. At least a part of the second part 32 is disposed between the second connecting portion 2214 and the third sidewall 213. The second part 32 bonds the second connecting portion 2214 to the third sidewall 213. Along the first direction X, the height of the second part 32 is $D_2$, satisfying: $0 < D_2 < H$, thereby being conducive to maintaining the shape of the angle between the first side seal edge 221 and the first sidewall 211, and reducing the risk of overflow of the insulation adhesive 30 out of the main portion 21.

In some embodiments, the condition of $D_2 \leq 0.4H$ being satisfied is conducive to maintaining the shape of the angle between the first side seal edge 221 and the first sidewall 211, saving insulation adhesive 30, reducing cost, and reducing the risk of poor appearance caused by overflow of the insulation adhesive 30. In addition, the above condition being satisfied may reduce the risk of rupture of the third sidewall 213 caused by the dropping of the cured insulation adhesive 30.

In some embodiments, the condition of $0.3 \text{ mm} \leq D_2 \leq 0.5 \text{ mm}$ being satisfied is conducive to maintaining the shape of the angle between the first side seal edge 221 and the first sidewall 211, and reducing the risk of overflow of the insulation adhesive 30 out of the main portion 21.

As an example, $D_1$ may be any one of 0.3 mm, 0.31 mm, 0.32 mm, 0.33 mm, 0.34 mm, 0.35 mm, 0.36 mm, 0.37 mm, 0.38 mm, 0.39 mm, 0.4 mm, 0.41 mm, 0.42 mm, 0.43 mm, 0.44 mm, 0.45 mm, 0.46 mm, 0.47 mm, 0.48 mm, 0.49 mm, or 0.5 mm.

The insulation adhesive 30 may be disposed by various methods. The following is an example of a specific method for disposing the insulation adhesive 30.

For example, when the first side seal edge 221 is laid flat, the extension direction from one end, close to the main portion 21, to one end, away from the main portion 21, of the first connecting portion 2212 is parallel to the first sidewall 211; and the direction from one end, close to the first connecting portion 2212, to one end, away from the main portion 21, of the second connecting portion 2214 is parallel to the first sidewall 211. In this case, the insulation adhesive 30 may be disposed on the first connecting portion 2212, the second connecting portion 2214, the end portion, away from the first connecting portion 2212, of the second connecting portion 2214, and the main portion 21. Subsequently, the first side seal edge 221 is bent to form the first connecting portion 2212 and the second connecting portion 2214, and the first connecting portion 2212 is made to form an angle relative to the first sidewall 211. In this case, the insulation adhesive 30 bonds the first connecting portion 2212 to the second connecting portion 2214 under the action of folding and squeezing. The insulation adhesive 30 also bonds the second connecting portion 2214 to the main portion 21. The insulation adhesive 30 covers one end, facing the main portion 21, of the second connecting portion 2214.

For another example, when the second connecting portion 2214 is bent toward the main portion 21 relative to the first connecting portion 2212, and an angle is formed between the first connecting portion 2212 and the first sidewall 211, the insulation adhesive 30 is directly dripped to the space between the second connecting portion 2214 and the third sidewall 213 of the main portion 21. The insulation adhesive 30 between the second connecting portion 2214 and the third sidewall 213 of the main portion 21 bonds the second connecting portion 2214 to the main portion 21. The insulation adhesive 30 also flows from the space between the second connecting portion 2214 and the third sidewall 213 of the main portion 21 to the space between the first connecting portion 2212 and the second connecting portion 2214. In this way, the insulation adhesive 30 covers one end, facing the main portion 21, of the second connecting portion 2214, and further, the insulation adhesive 30 bonds the first connecting portion 2212 to the second connecting portion 2214.

In some embodiments, the insulation adhesive 30 may be applied to the first side seal edge 221 or the main portion 21 by smearing or spot application or other means that is not particularly limited herein.

In some embodiments, the material of the insulation adhesive 30 includes at least one of vinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene fluoride, polyethylene, polypropylene, polyacrylic acid, styrene-butadiene rubber, acrylated styrene-butadiene rubber, epoxy resin, or nylon.

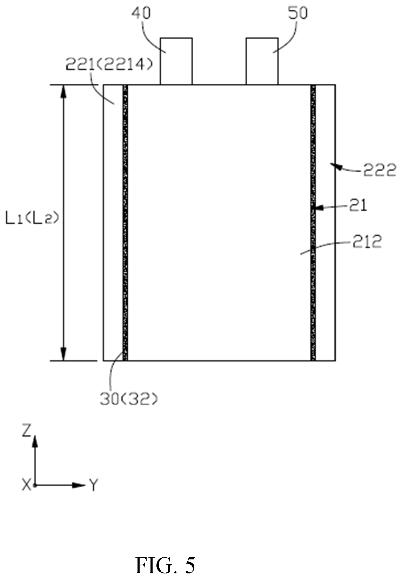

In some embodiments, referring to FIG. 3 and FIG. 5, along the third direction Z, the connection length between the main portion 21 and the first connecting portion 2212 is $L_1$, the length of the insulation adhesive 30 is $L_2$, and the first direction X, the second direction Y, and the third direction Z are perpendicular to each other, satisfying: $4L_1/5 \leq L_2 \leq L_1$. Such a configuration is conducive to improving the bonding effect of the insulation adhesive 30 and maintaining the shape of the angle between the first side seal edge 221 and the first sidewall 211.

In some embodiments, referring to FIG. 3 and FIG. 4, along an extension direction from an end at which the second connecting portion 2214 is close to the main portion 21 to an end at which the second connecting portion 2214 is away from the main portion 21, the width of the second connecting portion 2214 is $T_2$, satisfying: $0 \text{ mm} < |T_2 - T_1| \leq 0.5 \text{ mm}$.

When $|T_2-T_1|$ satisfies the above range, the width of the second connecting portion 2214 is less than the width of the first connecting portion 2212, thereby reserving a space between the end, facing the main portion 21, of the second connecting portion 2214 and the end at which the first connecting portion 2212 is connected to the main portion 21. On the one hand, the reserved space can accommodate the insulation adhesive 30, thereby making it convenient for the insulation adhesive 30 to cover the end, facing the main portion 21, of the second connecting portion 2214. On the other hand, the reserved space also allows the insulation adhesive 30 in a fluid state to pass through, thereby favorably allowing the insulation adhesive 30 to flow to the space between the first connecting portion 2212 and the second connecting portion 2214.

The value of $|T_2-T_1|$ falling within the above range prevents an excessive distance from the end, facing the main portion 21, of the second connecting portion 2214 to the end at which the first connecting portion 2212 is connected to the main portion 21. This arrangement prevents an excessive height of the insulation adhesive 30 between the second connecting portion 2214 and the third sidewall 213 in the first direction X, thereby reducing the amount of the insulation adhesive 30 consumed, reducing weight, increasing the energy density of the secondary battery 100, and reducing cost.

As an example, $|T_2-T_1|$ may be any one of 0.1 mm, 0.15 mm, 0.2 mm, 0.25 mm, 0.3 mm, 0.31 mm, 0.32 mm, 0.33 mm, 0.34 mm, 0.35 mm, 0.36 mm, 0.37 mm, 0.38 mm, 0.39 mm, 0.4 mm, 0.41 mm, 0.42 mm, 0.43 mm, 0.44 mm, 0.45 mm, 0.46 mm, 0.47 mm, 0.48 mm, 0.49 mm, or 0.5 mm.

It is hereby noted that in some embodiments, the second side seal edge 222 is bonded to the insulation adhesive 30. The relationship between the second side seal edge 222, the insulation adhesive 30, and the main portion 21 as well as the beneficial effects thereof may be learned by referring to the relationship between the first side seal edge 221, the insulation adhesive 30, and the main portion 21 as well as the beneficial effects described in any one of the above embodiments, the details of which are omitted here.

In some embodiments, $25° \leq \theta \leq 75°$. The angle $\theta$ between the first connecting portion 2212 and the first sidewall 211 satisfying the above relationship further reduces the overall occupied space of the secondary battery 100, thereby further increasing the energy density of the secondary battery 100.

As an example, $\theta$ may be any one of 25°, 26°, 28°, 30°, 32°, 34°, 35°, 36°, 38°, 40°, 42°, 44°, 45°, 46°, 48°, 50°, 52°, 54°, 55°, 56°, 58°, 60°, 62°, 64°, 65°, 66°, 68°, 70°, 72°, 74°, or 75°.

In some embodiments, referring to FIG. 4, along the second direction Y, an orthographic projection of the first side seal edge 221 lies between a plane at which the first sidewall 211 is located and a plane at which the second sidewall 212 is located. In this way, the first side seal edge 221 is prevented from extending beyond the first sidewall 211 and the second sidewall 212 in the first direction X. In this way, the thickness of the secondary battery 100 in the first direction X is not affected by the first side seal edge 221, thereby reducing the overall thickness of the secondary battery 100.

It is hereby noted that a side view shown in FIG. 4 or a cross-sectional view from a viewing angle similar to that shown in FIG. 4 may be made, and extension lines of the first sidewall 211 and the second sidewall 212 may be drawn. When the first side seal edge 221 is located between the extension lines of the first sidewall 211 and the second sidewall 212, the orthographic projection of the first side seal edge 221 in the second direction Y lies between the plane at which the first sidewall 211 is located and the plane at which the second sidewall 212 is located.

In some embodiments, $0.5\,\text{mm} \leq H < 1.5\,\text{mm}$, and $1.5\,\text{mm} \leq T_1 \leq 3\,\text{mm}$. When the thickness H of the main portion 21 in the first direction X falls within the range of $0.5\,\text{mm} \leq H < 1.5\,\text{mm}$, the secondary battery 100 is an ultra-thin secondary battery 100.

As an example, H may be any one of 0.5 mm, 0.6 mm, 0.7 mm, 0.8 mm, 0.9 mm, 1 mm, 1.1 mm, 1.2 mm, 1.3 mm, or 1.4 mm.

As an example, $T_1$ may be any one of 1.5 mm, 1.6 mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, or 3 mm.

In order to verify the impact caused by the change in the angles of the first side seal edge 221 and the second side seal edge 222, the volumetric energy density of the secondary battery 100, the spreads of the first side seal edge 221 and the second side seal edge 222, the following experiment is conducted.

The capacity of the secondary battery 100 is tested by the following method: charging the secondary battery 100 at a constant current of 0.5C until a full-charge voltage, and then discharging the secondary battery at a current of 0.2C until the voltage reaches 3.0 V, and obtaining the capacity (Ah) and energy (Wh) released during the discharge.

The formula for calculating the volumetric energy density is: volumetric energy density (Wh/L) = energy released during the test (Wh) / (length of the secondary battery 100 (dm) $\times$ width of the secondary battery 100 (dm) $\times$ thickness of the secondary battery 100 (dm))

Method for testing the spread of the first side seal edge 221:

First, measuring the distance between the end, away from the main portion 21, of the first connecting portion 2212 of each of 100 secondary batteries 100 and the third sidewall 213 along the second direction Y, denoted as X1, X2,..., X100, respectively; and placing the 100 battery cells in an environment of 65 °C and 90% humidity to stand for 120 hours; taking out the batteries and restoring the room temperature, and then measuring the distance between the end, away from the main portion 21, of the first connecting portion 2212 of each of the 100 secondary batteries 100 and the third sidewall 213 along the second direction Y, denoted as X1', X2',..., and X100', respectively; and finally, calculating the spread $\Delta$ formed between the pre-test distance and the post-test distance of each battery cell one by one, that is, $\Delta 1 = X1' - X1$, $\Delta 2 = X2' - X2$,..., and $\Delta 100 = X100' - X100$. The battery cells satisfying the condition of $\Delta = \Delta 0 \pm 0.2$ mm are considered to have passed the test, and the battery cells that do not meet the condition are considered to have failed. In this way, the total pass rate (%) is calculated.

The method for testing the spread of the second side seal edge 222 may be learned by referring to the method for testing the spread of the first side seal edge 221, the details of which are omitted here.

The following describes the specific implementations of the secondary batteries 100 in the embodiments and comparative embodiments.

**Embodiments**

A secondary battery 100 is assembled in the following process:

(1) Preparing a negative electrode plate: Mixing artificial graphite as a negative active material, conductive carbon black (Super P), and the styrene butadiene rubber (SBR) at a weight ratio of 96 : 1.5 : 2.5, adding deionized water as a solvent, blending the mixture into a slurry in which the mass percent of the solid is 70 wt%, and stirring well. Coating one surface of a 10 $\mu$m-thick negative current collector copper foil with the slurry evenly, reserving a blank foil region at the edge of the copper foil, and drying the slurry at a temperature of 110 °C to obtain a negative electrode plate coated with a 150 $\mu$m-thick negative active material layer on one side. Repeating the foregoing steps on the other surface of the negative electrode plate to obtain a negative electrode plate coated with the negative active material layer on both sides. Subsequently, cutting away the excess blank foil region by a laser die-cutting process, so as to obtain a negative tab.

(2) Preparing a positive electrode plate: Mixing lithium cobalt oxide (LiCoO$_2$) as a positive active material, conductive carbon black (super P), and polyvinylidene difluoride (PVDF) at a weight ratio of 97.5: 1.0: 1.5, and adding N-methyl pyrrolidone (NMP) as a solvent to form a slurry in which a solid content is 75 wt%, and stirring well. Coating one surface of a 12 $\mu$m-thick positive current collector aluminum foil evenly with the slurry, reserving a blank foil region at the edge of the aluminum foil, and then drying the slurry at a temperature of 90 °C to obtain a positive electrode plate coated with a 100 $\mu$m-thick positive active material layer. Repeating the above coating steps on the other surface of the aluminum foil to prepare another first electrode plate coated with the active material layer on both sides. Subsequently, cutting away the excess blank foil region by a laser die-cutting process, so as to obtain a positive tab.

(3) Preparing an electrolyte solution: Mixing ethylene carbonate (EC), ethyl methyl carbonate (EMC), and diethyl carbonate (DEC) at a weight ratio of EC: EMC: DEC = 30: 50: 20 in a dry argon atmosphere to form a base organic solvent, then adding lithium salt hexafluorophosphate (LiPF$_6$) into the base organic solvent to dissolve, and mixing the solution evenly to obtain an electrolyte solution in which a lithium salt concentration is 1.15 mol/L.

(4) Preparing a separator: Using a three-layer separator, where the separator includes a first adhesive layer, a first substrate layer, and a first adhesive layer stacked in layers. The first substrate layer is made of polyethylene (PE). The first adhesive layer contains a first binder. The first adhesive layer further contains inorganic ceramic particles Al$_2$O$_3$.

(5) Preparing an electrode assembly 10: Stacking the positive electrode plate, the separator, and the negative electrode plate, and using a flat plate to hot-press the stacked structure for 10 seconds at a temperature of 80 °C and a pressure of 1.5 MPa to form an electrode assembly 10 for future use.

(6) Assembling the electrode assembly 10: Placing an aluminum laminated film, which is stamped to form a cavity, into an assembly jig, with the cavity side facing upward. Placing the electrode assembly 10 into the cavity, and pressing the film tightly by exerting an external force. Subsequently, covering the electrode assembly 10 with another aluminum laminated film stamped to form a cavity, with the cavity side facing downward. Heat-sealing the periphery of the two aluminum laminated films by hot pressing to obtain an assembled electrode assembly 10. The aluminum laminated film outside the assembled electrode assembly 10 is a packaging bag 20. The packaging bag 20 includes a main portion 21 for accommodating the electrode assembly 10, and a first seal edge, a second seal edge, and a top seal edge 223 connected to the main portion 21. The main portion 21 includes a first sidewall 211, a second sidewall 212, a third sidewall 213, and a fourth sidewall 214. The assembled electrode assembly 10 is square. The finished electrode assembly is 1.2 mm in thickness, 34.5 mm in width, and 90 mm in length. The width $T_1$ of the first connecting portion 2212 is 1.3 mm, and the width $T_2$ of the second connecting portion 2214 is 1.0 mm.

(7) Folding and bonding: Folding the first side seal edge 221 for 180° so that the first side seal edge 221 forms a first connecting portion 2212 and a second connecting portion 2214. Folding the edge of the first side seal edge 221 that is already folded, so as to form an angle between the first connecting portion 2212 and the first sidewall 211. The angle between the first connecting portion 2212 and the first sidewall 211 is $\theta$. Subsequently, dripping insulation adhesive 30 into the space between the second connecting portion 2214 and the third sidewall 213 until the insulation adhesive 30 covers one end, facing the main portion 21, of the second connecting portion 2214. The insulation adhesive 30 bonds the first connecting portion 2212 to the second connecting portion 2214. The insulation adhesive 30 further bonds the second connecting portion 2214 to the main portion 21. Performing the same operations on the second side seal edge 222 as those on the first side seal edge 221, so that an angle $\beta$ is formed between the second side seal edge 222 and the first sidewall 211.

(8) Electrolyte injection and sealing: Injecting an electrolyte solution into the assembled electrode assembly 10, and performing steps such as vacuum sealing, static standing, hot-pressing, chemical formation, and shaping to obtain a secondary battery 100.

**Comparative Embodiments**

The comparative embodiments differ from the embodiments in that in Comparative Embodiment 1, the first side seal edge 221 and the second side seal edge 222 are not folded at the edge, and the first side seal edge 221 and the second side seal edge 222 are in flat-laying state; in Comparative Embodiment 2, the first side seal edge 221 and the second side seal edge 222 are directly folded to form a 90° angle to the first sidewall 211; in Comparative Embodiment 3, the insulation adhesive 30 does not bond the first connecting portion 2212 to the second connecting portion 2214; in Comparative Embodiment 4, the insulation adhesive 30 does not bond the second connecting portion 2214 to the main portion 21; and in Comparative Embodiment 5, the insulation adhesive 30 neither bonds the first connecting portion 2212 to the second connecting portion 2214 nor bonds the second connecting portion 2214 to the main portion 21.

The main parameter control and test results of Embodiment 1 and Comparative Embodiments 1 to 5 are shown in Table 1 below:

**Table 1**

| Item | $D_1$ (mm) | $D_2$ (mm) | $\theta$ (°) | $\beta$ (°) | Volumetric energy density (Wh/L) | Spread test pass rate of first side seal edge 221/second side seal edge 222 (%) |
|---|---|---|---|---|---|---|
| Comparative Embodiment 1 | 0.8 | 0.4 | 0 | 0 | 626.41 | 100% |
| Comparative Embodiment 2 | 0.8 | 0.4 | 90 | 90 | 625.35 | 97% |
| Comparative Embodiment 3 | 0 | 0.4 | 45 | 45 | 641.36 | 50% |
| Comparative Embodiment 4 | 0.8 | 0 | 45 | 45 | 641.36 | 30% |
| Comparative Embodiment 5 | 0 | 0 | 45 | 45 | 641.36 | 0% |
| Embodiment 1 | 0.8 | 0.4 | 45 | 45 | 641.36 | 100% |

As can be seen from Table 1, in contrast to Comparative Embodiments 1 to 2, Embodiment 1 satisfies $0° < \theta < 90°$ and $0° < \beta < 90°$, thereby reducing the occupied space of the secondary battery 100 and increasing the volumetric energy density of the secondary battery 100.

As can be seen from Table 1, in Embodiment 1 in contrast to Comparative Embodiments 3 to 5, both a first part 31 and a second part 32 are provided, the insulation adhesive 30 bonds the first connecting portion 2212 to the second connecting portion 2214, and the insulation adhesive 30 also bonds the second connecting portion 2214 to the main portion 21, thereby being conducive to improving the overall structural strength of the first side seal edge 221, maintaining the shape of the angle between the first side seal edge 221 and the first sidewall 211, and reducing the probability of spread-out of the first side seal edge 221 and the second side seal edge 222.

The main parameter control and test results of the spread test of the first side seal edge 221 and the second side seal edge 222 of the secondary battery 100 in Embodiment 2-12 are shown in Table 2 below:

**Table 2**

| Item | $D_1$ (mm) | $D_2$ (mm) | $T_1$ (mm) | H (mm) | $D_1/T_1$ | $D_2/H$ | $\theta$ (°) | $\beta$ (°) | Spread test pass rate of first side seal edge 221/second side seal edge 222 |
|---|---|---|---|---|---|---|---|---|---|
| Embodiment 2 | 0.4 | 0.4 | 1.3 | 1.2 | 0.3 | 0.3 | 45 | 45 | 65% |
| Embodiment 3 | 0.5 | 0.4 | 1.3 | 1.2 | 0.4 | 0.3 | 45 | 45 | 76% |
| Embodiment 4 | 0.6 | 0.4 | 1.3 | 1.2 | 0.5 | 0.3 | 45 | 45 | 88% |
| Embodiment 5 | 0.7 | 0.4 | 1.3 | 1.2 | 0.5 | 0.3 | 45 | 45 | 92% |
| Embodiment 6 | 0.9 | 0.4 | 1.3 | 1.2 | 0.7 | 0.3 | 45 | 45 | 100% |
| Embodiment 7 | 1.0 | 0.4 | 1.3 | 1.2 | 0.8 | 0.3 | 45 | 45 | 100% |
| Embodiment 8 | 1.1 | 0.4 | 1.3 | 1.2 | 0.8 | 0.3 | 45 | 45 | 100% |
| Embodiment 9 | 1.2 | 0.4 | 1.3 | 1.2 | 0.9 | 0.3 | 45 | 45 | 100% |

(continued)

| Item | $D_1$ (mm) | $D_2$ (mm) | $T_1$ (mm) | H (mm) | $D_1/T_1$ | $D_2/H$ | $\theta$ (°) | $\beta$ (°) | Spread test pass rate of first side seal edge 221/second side seal edge 222 |
|---|---|---|---|---|---|---|---|---|---|
| Embodiment 10 | 0.8 | 0.2 | 1.3 | 1.2 | 0.6 | 0.2 | 45 | 45 | 62% |
| Embodiment 11 | 0.8 | 0.3 | 1.3 | 1.2 | 0.6 | 0.3 | 45 | 45 | 90% |
| Embodiment 12 | 0.8 | 0.5 | 1.3 | 1.2 | 0.6 | 0.4 | 45 | 45 | 100% |

As can be seen from Table 2, in Embodiment 1 and Embodiments 3 to 9 in contrast to Embodiment 2, the condition of $D_1 \geq 0.5$ mm is satisfied, thereby further improving the overall structural strength of the first side seal edge 221 and reducing the probability of spread-out of the first side seal edge 221 and the second side seal edge 222.

As can be seen from Table 2, in Embodiment 1 and Embodiments 11 and 12 in contrast to Embodiment 10, the condition of $0.3\,\text{mm} \leq D_2 \leq 0.5\,\text{mm}$ is satisfied, thereby being conducive to maintaining the shape of the angle between the first side seal edge 221 and the first sidewall 211 and reducing the probability of spread-out of the first side seal edge 221 and the second side seal edge 222.

The main parameter control and test results of the volumetric energy density test in Embodiments 13 to 26 are shown in Table 3 below:

**Table 3**

| Item | $D_1$ (mm) | $D_2$ (mm) | $\theta$ (°) | $\beta$ (°) | Volumetric energy density (Wh/L) (%) |
|---|---|---|---|---|---|
| Embodiment 13 | 0.8 | 0.4 | 10° | 10° | 627.18 |
| Embodiment 14 | 0.8 | 0.4 | 15° | 15° | 628.15 |
| Embodiment 15 | 0.8 | 0.4 | 20° | 20° | 629.49 |
| Embodiment 16 | 0.8 | 0.4 | 25° | 25° | 631.19 |
| Embodiment 17 | 0.8 | 0.4 | 30° | 30° | 633.25 |
| Embodiment 18 | 0.8 | 0.4 | 35° | 35° | 635.64 |
| Embodiment 19 | 0.8 | 0.4 | 40° | 40° | 638.35 |
| Embodiment 20 | 0.8 | 0.4 | 50° | 50° | 644.65 |
| Embodiment 21 | 0.8 | 0.4 | 55° | 55° | 648.18 |
| Embodiment 22 | 0.8 | 0.4 | 60° | 60° | 651.94 |
| Embodiment 23 | 0.8 | 0.4 | 65° | 65° | 655.89 |
| Embodiment 24 | 0.8 | 0.4 | 70° | 70° | 648.33 |
| Embodiment 25 | 0.8 | 0.4 | 75° | 75° | 634.78 |
| Embodiment 26 | 0.8 | 0.4 | 80° | 80° | 626.69 |

As can be seen from Table 3 above, in Embodiment 1 and Embodiments 16 to 25 in contrast to Embodiments 13 to 15 and Embodiment 26, the conditions of $25° < \theta < 75°$ and $25° < \beta < 75°$ are satisfied, thereby further reducing the occupied space of the secondary battery 100 and further increasing the volumetric energy density of the secondary battery 100.

In some embodiments, referring to FIG. 3 and FIG. 4, along the first direction X, one end, connected to the main portion 21, of the first connecting portion 2212 is closer to the first sidewall 211 than the second sidewall 212. This arrangement may fully utilize the occupied space of the secondary battery 100 in the first direction X more efficiently, and further improve the space efficiency of the secondary battery 100.

In some embodiments, referring to FIG. 3 and FIG. 4, the main portion 21 further includes a third sidewall 213 and a fourth sidewall 214 disposed opposite to each other along the second direction Y. One end, connected to the main portion 21, of the first connecting portion 2212 is connected to the third sidewall 213 and the first sidewall 211 separately, thereby utilizing the occupied space of the secondary battery 100 in the first direction X more efficiently, and further improving the space efficiency of the secondary battery 100.

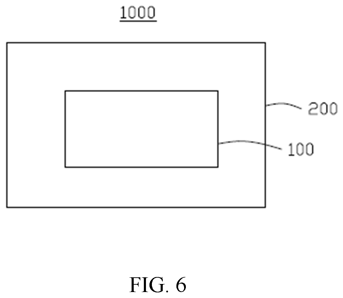

Referring to FIG. 6, an embodiment of this application further provides an electronic device 1000. The electronic device 1000 includes the secondary battery 100 disclosed in any one of the above embodiments. The electronic device 1000 employs the technical solutions of the secondary battery 100 disclosed in any one of the above embodiments, and therefore, achieves at least the beneficial effects brought by the technical solutions of the secondary battery 100 disclosed in any one of the above embodiments, the details of which are omitted here.

In some embodiments, referring to FIG. 6, the electronic device 1000 further includes a device body 200. The secondary battery 100 is mounted in the device body 200.

In some embodiments, the electronic device 1000 may be a mobile phone, a tablet computer, an e-reader, AR glasses, VR glasses, or the like, the detailed items of which are not enumerated here exhaustively.

In addition, a person of ordinary skill in the art understands that the foregoing embodiments are merely intended to illustrate this application, but not to limit this application. Any and all appropriate modifications and changes made to the embodiments without departing from the essence of this application still fall within the protection scope of this application.

## Claims

1. A secondary battery, **characterized in that** the secondary battery comprises an electrode assembly, a packaging bag, and an insulation adhesive, and the packaging bag comprises:

   a main portion, wherein an accommodation cavity is provided in the main portion, the accommodation cavity accommodates the electrode assembly, the main portion comprises a first sidewall and a second sidewall disposed opposite to each other along a first direction, and the first direction is a thickness direction of the secondary battery; and

   a sealing portion, wherein the sealing portion is connected to the main portion and seals the accommodation cavity, the sealing portion comprises a first side seal edge, and the first side seal edge is disposed on one side of the main portion in a second direction perpendicular to the first direction; the first side seal edge comprises a first connecting portion and a second connecting portion disposed in sequence, the first connecting portion is connected to the main portion, the second connecting portion is bent toward the main portion relative to the first connecting portion, an angle $\theta$ is formed between the first connecting portion and the first sidewall, satisfying: $0° < \theta < 90°$; along the first direction, a thickness of the main portion is H, and along an extension direction from an end at which the first connecting portion is connected to the main portion to an end at which the first connecting portion is away from the main portion, a width of the first connecting portion is $T_1$, satisfying: $H < T_1$; and the insulation adhesive covers one end, facing the main portion, of the second connecting portion; the insulation adhesive bonds the first connecting portion to the second connecting portion, and the insulation adhesive further bonds the second connecting portion to the main portion.

2. The secondary battery according to claim 1, **characterized in that** the main portion further comprises a third sidewall and a fourth sidewall disposed opposite to each other along the second direction, and the first side seal edge is connected to the third sidewall;

   the insulation adhesive comprises a first part and a second part, the first part is disposed between the first connecting portion and the second connecting portion, and the first part bonds the first connecting portion to the second connecting portion; at least a part of the second part is disposed between the second connecting portion and the third sidewall, and the second part bonds the second connecting portion to the third sidewall; and along the extension direction from the end at which the first connecting portion is connected to the main portion to the end at which the first connecting portion is away from the main portion, a height of the first part is $D_1$, and along the first direction, a height of the second part is $D_2$, satisfying: $0 < D_1 < T_1$, and $0 < D_2 < H$.

3. The secondary battery according to claim 2, **characterized in that** $D_1 \leq 0.7T_1$, and $D_2 \leq 0.4H$.

4. The secondary battery according to claim 2, **characterized in that** $0.5\,mm \leq H < 1.5\,mm$, and $1.5\,mm \leq T_1 \leq 3\,mm$; and the secondary battery further satisfies at least one of the following conditions:

$$(1)\ D_1 \geq 0.5 \text{ mm;}$$

or

$$(2)\ 0.3\ \text{mm} \le D_2 \le 0.5\ \text{mm}.$$

5. The secondary battery according to claim 3, **characterized in that**, along a third direction, a connection length between the main portion and the first connecting portion is $L_1$, and a length of the insulation adhesive is $L_2$, satisfying: $4L_1/5 \le L_2 \le L_1$; and
the first direction, the second direction, and the third direction are perpendicular to each other.

6. The secondary battery according to claim 1, **characterized in that**, along an extension direction from an end at which the second connecting portion is close to the main portion to an end at which the second connecting portion is away from the main portion, a width of the second connecting portion is $T_2$, satisfying: $0\ \text{mm} < |T_2 - T_1| \le 0.5\ \text{mm}$.

7. The secondary battery according to claim 1, **characterized in that** $25° \le \theta \le 75°$.

8. The secondary battery according to claim 1, **characterized in that**, along the second direction, an orthographic projection of the first side seal edge lies between a plane at which the first sidewall is located and a plane at which the second sidewall is located.

9. The secondary battery according to any one of claims 1 to 8, **characterized in that**, along the first direction, one end, connected to the main portion, of first connecting portion is closer to the first sidewall than the second sidewall.

10. The secondary battery according to claim 9, **characterized in that** the main portion further comprises a third sidewall and a fourth sidewall disposed opposite to each other along the second direction, and the first connecting portion is connected to the third sidewall and the first sidewall separately.

11. The secondary battery according to any one of claims 1 to 8, **characterized in that** a material of the insulation adhesive comprises at least one of vinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene fluoride, polyethylene, polypropylene, polyacrylic acid, styrene-butadiene rubber, acrylated styrene-butadiene rubber, epoxy resin, or nylon.

12. The secondary battery according to any one of claims 1 to 8, **characterized in that** the packaging bag comprises a first flexible portion and a second flexible portion, the first flexible portion and the second flexible portion enclose and define the main portion, and the first flexible portion is connected to the second flexible portion to form the sealing portion that seals the accommodation cavity.

13. An electronic device, **characterized in that** the electronic device comprises the secondary battery according to any one of claims 1 to 12.

FIG. 1

100

FIG. 2

FIG. 3

FIG. 4

FIG. 5

1000

200

100

FIG. 6

**EP 4 773 356 A1**

## INTERNATIONAL SEARCH REPORT

| | International application No. |
| --- | --- |
| | **PCT/CN2025/082371** |

| A. | CLASSIFICATION OF SUBJECT MATTER |
| --- | --- |
| | H01M50/105(2021.01)i; H01M50/184(2021.01)i; H01M50/186(2021.01)i |

According to International Patent Classification (IPC) or to both national classification and IPC

| B. | FIELDS SEARCHED |
| --- | --- |

Minimum documentation searched (classification system followed by classification symbols)

    IPC: H01M

Documentation searched other than minimum documentation to the extent that such documents are included in the fields searched

Electronic data base consulted during the international search (name of data base and, where practicable, search terms used)

    CNABS; CNTXT; ENTXT; ENTXTC; CNKI: 电池, 电芯, 包边, 封边, 侧封, 夹角, 角度, 折角, 弯折, 折边, 折叠, 翻边, 翻折, 绝缘胶, cell, battery, side seal, bent, insulating glue

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 118156693 A (NINGDE AMPEREX TECHNOLOGY LTD.) 07 June 2024 (2024-06-07) <br> description, paragraphs 0078-0174, and figures 1-6 | 1-13 |
| PX | CN 221947251 U (HUIZHOU LIWINON NEW ENERGY TECHNOLOGY CO., LTD.) 01 November 2024 (2024-11-01) <br> description, paragraphs 0025-0036, and figures 1-3 | 1-13 |
| PY | CN 119050566 A (DONGGUAN AMPEREX TECHNOLOGY LTD. et al.) 29 November 2024 (2024-11-29) <br> description, paragraphs 0099-0157, and figures 1-12 | 1-13 |
| PY | CN 118448784 A (NINGDE AMPEREX TECHNOLOGY LTD.) 06 August 2024 (2024-08-06) <br> description, paragraphs 0025-0089, and figures 1-6 | 1-13 |
| X | CN 218005042 U (BYD CO., LTD.) 09 December 2022 (2022-12-09) <br> description, paragraphs 0023 and 0051-0088, and figures 1-10 | 1-13 |
| X | CN 218385447 U (ZHUHAI GUANYU POWER SUPPLY CO., LTD.) 24 January 2023 (2023-01-24) <br> description, paragraphs 0016 and 0031-0097, and figures 1-11 | 1-13 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 June 2025** | **16 June 2025** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2025/082371** |

**C.   DOCUMENTS CONSIDERED TO BE RELEVANT**

| Category* | Citation of document, with indication, where appropriate, of the relevant passages | Relevant to claim No. |
| --- | --- | --- |
| Y | CN 208862104 U (TIANJIN EV ENERGIES CO., LTD.) 14 May 2019 (2019-05-14) description, paragraphs 0016-0017 and 0029-0037, and figures 1-4 | 1-13 |
| Y | CN 214313392 U (HENAN JINYUAN HUANYU ENERGY STORAGE TECHNOLOGY CO., LTD.) 28 September 2021 (2021-09-28) description, paragraphs 0012 and 0024-0034, and figures 1-4 | 1-13 |
| A | CN 209592206 U (NINGDE CONTEMPORARY AMPEREX TECHNOLOGY CO., LTD.) 05 November 2019 (2019-11-05) entire document | 1-13 |

Form PCT/ISA/210 (second sheet) (July 2022)

**INTERNATIONAL SEARCH REPORT**
Information on patent family members

International application No.

**PCT/CN2025/082371**

| Patent document cited in search report | | | Publication date (day/month/year) | Patent family member(s) | Publication date (day/month/year) |
|---|---|---|---|---|---|
| CN | 118156693 | A | 07 June 2024 | None | |
| CN | 221947251 | U | 01 November 2024 | None | |
| CN | 119050566 | A | 29 November 2024 | None | |
| CN | 118448784 | A | 06 August 2024 | None | |
| CN | 218005042 | U | 09 December 2022 | None | |
| CN | 218385447 | U | 24 January 2023 | None | |
| CN | 208862104 | U | 14 May 2019 | None | |
| CN | 214313392 | U | 28 September 2021 | None | |
| CN | 209592206 | U | 05 November 2019 | None | |

Form PCT/ISA/210 (patent family annex) (July 2022)